# FASCICULE DE BREVET EUROPEEN

(11) **EP 3 729 609 B1**
(45) Date de publication et mention de la délivrance du brevet: **19.01.2022**
(21) Numéro de dépôt: 18836295.8
(22) Date de dépôt: 13.12.2018
(51) Int. Cl.: H02K 3/52, H02K 16/04

(54) **STATOR DE MOTEUR OU GENERATRICE ELECTROMAGNETIQUE AVEC SUPPORT INDIVIDUEL DE BOBINAGE ENCLIQUETE SUR UNE DENT ASSOCIEE**
STATOR FÜR EINEN MOTOR ODER EINEN ELEKTROMAGNETISCHEN GENERATOR MIT EINZELNEN AUF EINEM ZUGEORDNETEN ZAHN AUFSCHNAPPBAREN WICKLUNGSTRÄGERN
STATOR FOR A MOTOR OR ELECTROMAGNETIC GENERATOR WITH INDIVIDUAL WINDING SUPPORT SNAP-FITTED TO AN ASSOCIATED TOOTH

(30) Priorité: 18.12.2017 FR 1701313
(43) Date de publication de la demande: 28.10.2020
(73) Titulaire: Whylot, 46100 Cambes (FR)
(72) Inventeur: MIHAILA, Vasile, 46100 Figeac (FR); RAVAUD, Romain, 46240 Labastide-Murat (FR)
(86) Numéro de dépôt international: PCT/IB2018/059998
(87) Numéro de publication internationale: WO 2019/123133

(56) Documents cités:
- EP-A1- 1 255 344
- EP-A1- 2 329 583
- JP-A- 2005 143 268
- US-A1- 2010 077 601

## Description

La présente invention concerne un stator de moteur ou génératrice électromagnétique avec support individuel de bobinage encliqueté sur une dent associée. Le moteur ou la génératrice électromagnétique est avantageusement à flux axial.

La présente invention trouve une application avantageuse mais non limitative pour un moteur électromagnétique délivrant une forte puissance avec une vitesse de rotation du rotor élevée, ce qui est obtenu par les caractéristiques spécifiques du stator selon la présente invention en interaction avec les caractéristiques spécifiques d'un rotor associé au stator. Un tel moteur ou génératrice peut être utilisé par exemple comme moteur électromagnétique dans un véhicule automobile totalement électrique ou hybride.

Avantageusement mais non limitativement, le moteur ou la génératrice électromagnétique peut comprendre au moins un rotor encadré par deux stators, ces éléments pouvant se superposer les uns par rapport aux autres en étant séparés par au moins un entrefer sur un même arbre.

Dans des applications à haute vitesse, il est nécessaire d'avoir non seulement un système compact rendu possible par la réduction de la masse et de l'encombrement du moteur axial pour un rendement optimal, mais également une très bonne tenue mécanique de la partie tournante, c'est-à-dire le ou les rotors, afin d'améliorer la fiabilité du système mais aussi du ou des stators.

Dans des applications à haute vitesse, il est nécessaire de réduire les pertes pour un rendement optimal. Dans des applications automobiles, la miniaturisation est de plus en plus recherchée. Pour cela il est important d'avoir un système compact rendu possible par la réduction de la masse et de l'encombrement du moteur axial, mais également une très bonne tenue mécanique de la partie tournante, afin d'améliorer la fiabilité du système.

Pour une machine électromagnétique à flux axial, le rotor comporte un corps sous forme d'un disque présentant deux faces circulaires reliées par une épaisseur, le disque étant délimité entre une couronne externe et une périphérie interne délimitant un évidement pour un arbre de rotation.

Au moins deux aimants permanents sont appliqués contre au moins une des deux faces circulaires du corps dite face de support. Pour un rotor mono-entrefer destiné à être associé à un stator, une seule face circulaire du corps porte des aimants tandis que pour un rotor à deux entrefers avec un stator respectif, ce sont les deux faces qui portent des aimants.

Les aimants sont chacun maintenus sur la face ou leur face respective par des moyens de maintien, un intervalle étant laissé entre lesdits au moins deux aimants sur une même face.

Pour le stator ou chaque stator, ceux-ci portent des éléments de bobinage comprenant une dent portant une bobine, la dent étant encadrée sur chacun de ses côtés par une encoche, un fil métallique bon conducteur étant enroulé sur la dent pour former chaque bobinage.

Quand la série ou les séries de bobinages sont alimentées électriquement, le rotor qui est solidarisé à l'arbre de sortie du moteur est soumis à un couple résultant du champ magnétique, le flux magnétique créé étant un flux axial pour une machine électromagnétique à flux axial et un flux radial pour une machine à flux radial.

Il existe plusieurs manières de former un bobinage autour des dents, la plus simple étant de former un bobinage concentrique. Ceci ne donnait pas satisfaction du fait d'un mauvais rendement du moteur ou de la génératrice ainsi bobiné. Cependant de grands progrès ont été accomplis dans la conception des rotors en augmentant leur solidité et le rendement du moteur et de la machine qui remettent en actualité l'utilisation d'un bobinage concentrique pour un stator.

Toutefois, il est nécessaire de retravailler la conception d'un stator à bobinage concentrique pour rationaliser sa fabrication.

Le document EP-A-2 329 583 décrit un stator de moteur ou génératrice électromagnétique comprenant des bobinages et un circuit magnétique, le stator comportant une culasse de forme circulaire ou polygonale et des dents de support de bobinage, chaque bobinage reposant sur une dent en entourant au moins partiellement un support de bobinage.

Chaque support de bobinage comprend ou est associé à des moyens d'encliquetage coopérant avec des moyens d'encliquetage complémentaires portés par une dent associée au support de bobinage afin que le support de bobinage soit solidarisé avec la dent associée, avec, d'une part, chaque dent et, d'autre part, les portions intermédiaire et de recouvrement de chaque support de bobinage étant de forme prismatique avec deux faces triangulaires ou de forme trapézoïdale avec une petite base la plus interne à la culasse et une grande base la plus externe à la culasse reliées par deux faces latérales inclinées.

Ce document ne permet pas de rationaliser la fabrication d'un stator à dents en rendant l'enroulement des bobinages de fils électriques sur chaque dent plus facile du fait des moyens d'encliquetage proposés dans ce document.

Le problème à la base de la présente invention est de rationaliser la fabrication d'un stator à dents en rendant l'enroulement des bobinages de fils électriques sur chaque dent plus facile

A cet effet la présente invention concerne un stator de moteur ou génératrice électromagnétique comprenant des bobinages et un circuit magnétique, le stator comportant une culasse de forme circulaire ou polygonale et des dents de support de bobinage, chaque bobinage reposant sur une dent en entourant au moins partiellement un support de bobinage, chaque support de bobinage comprenant ou étant associé à des moyens d'encliquetage coopérant avec des moyens d'encliquetage complémentaires portés par une dent associée au support de bobinage afin que le support de bobinage soit solidarisé avec la dent associée avec, d'une part, chaque dent et, d'autre part, les portions intermédiaire et de recouvrement plane de chaque support de bobinage étant de forme prismatique avec deux faces triangulaires ou de forme trapézoïdale avec une petite base la plus radialement Z interne à la culasse et une grande base la plus radialement externe à la culasse reliées par deux faces latérales inclinées, caractérisé en ce que le contour externe de la portion de recouvrement plane délimite intérieurement un espace vide triangulaire ou quadrangulaire portant soit au moins une portion d'encliquetage faisant saillie vers la dent en formant les moyens d'encliquetage, la dent comportant à proximité de chaque bord latéral de sa face en vis-à-vis du bobinage une rainure, les deux rainures logeant respectivement une des portions d'encliquetage en formant les moyens d'encliquetage complémentaires ou soit un élément de blocage de forme prismatique avec deux faces triangulaires ou de forme trapézoïdale étant inséré, l'élément de blocage présentant un contour externe correspondant au contour interne de l'espace vide avec un jeu juste suffisant entre le contour externe de l'élément de blocage et le contour interne de l'espace pour une insertion de l'élément de blocage dans l'espace vide, les bords de la face triangulaire en vis-à-vis de la dent associée de l'élément de blocage ou au moins les deux bords en vis-à-vis de la dent associée des faces latérales inclinées de la forme trapézoïdale de l'élément de blocage portant au moins une portion d'encliquetage faisant saillie vers la dent en formant les moyens d'encliquetage, la dent comportant à proximité de chaque bord latéral de sa face en vis-à-vis du bobinage une rainure, les deux rainures logeant respectivement une des portions d'encliquetage en formant les moyens d'encliquetage complémentaires.

L'effet technique obtenu est une facilité de montage des bobinages qui valorise encore plus l'emploi de bobinages concentriques pour un moteur ou génératrice électromagnétique, ce qui permet d'amplifier leur utilisation. L'encliquetage se fait facilement et permet un maintien ferme du bobinage sur la dent en faisant obstacle à une sortie du bobinage d'une insertion sur la dent.

En général les portions intermédiaires et de recouvrement présentent une forme adaptée à celle de la dent associée.

Dans la première forme de réalisation de la présente invention, avec portion d'encliquetage faisant saillie vers la dent, l'encliquetage se fait par les faces latérales de l'espace vide dans le support de bobinage après insertion de la dent dans cet espace vide. Les faces latérales de l'espace peuvent porter chacune un ergot s'insérant dans une rainure associée de la dent.

La deuxième forme de réalisation nécessite un élément de blocage. C'est cet élément de blocage qui effectue l'encliquetage avec la dent. A proximité de chaque bord latéral de la face en vis-à-vis du bobinage ne signifie pas obligatoirement que les rainures sont sur cette face. Les rainures peuvent être sur des faces latérales de la dent à proximité du bord latéral de la face en vis-à-vis.

Avantageusement, le support de bobinage comprend une portion intermédiaire sur laquelle est enroulé le bobinage et une portion de recouvrement plane se trouvant la plus éloignée de la dent associée en position de solidarisation du support de bobinage sur la dent en étant séparée de la dent par le bobinage et la portion intermédiaire, la portion de recouvrement plane présentant un contour externe recouvrant à distance au moins un pourtour externe en vis-à-vis du bobinage et en faisant butée contre le pourtour externe du bobinage, le support de bobinage étant d'un seul tenant ou non.

C'est la portion de recouvrement plane par son contour externe qui fait obstacle contre une sortie du bobinage d'une insertion autour de la dent. La portion intermédiaire peut présenter des rainures correspondant à la dimension du fil électrique à bobiner pour un enroulement facilité du bobinage.

Avantageusement, chaque bobinage est enroulé concentriquement autour de la portion intermédiaire. Ceci représente la manière la plus simple d'enrouler un bobinage.

Avantageusement, la portion de recouvrement plane associée à une dent est adjacente à une portion de recouvrement plane associée à chaque dent adjacente, un ensemble des portions de recouvrement formant un anneau recouvrant entièrement les dents et les intervalles les séparant.

Ceci permet d'obtenir un anneau complet et continu, ce qui assure une meilleure protection des bobinages.

Avantageusement, les supports de bobinage sont en plastique. Ceci est particulièrement le cas dans la deuxième forme de réalisation nécessitant un élément de blocage qui lui est avantageusement métallique.

Avantageusement, les bobinages sont des bobinages triphasés.

Avantageusement, le support de bobinage comprend à une extrémité tournée vers la culasse un support strié des phases de bobinage, un ensemble des supports striés des phases de bobinage formant un anneau à la base des dents contre la culasse du stator supportant les dents, l'anneau présentant des stries concentriques. Les phases de bobinage sont ainsi maintenues dans les supports striés réalisant un anneau complet et fermé.

Avantageusement, chaque dent est formée par des tôles enroulées ou feuilletées.

L'invention concerne un moteur ou génératrice électrique comprenant au moins un rotor et au moins un stator, le moteur étant à flux axial, caractérisé en ce que le stator est tel que précédemment décrit.

Avantageusement, ledit au moins un rotor comprend des structures d'aimant formant des pôles d'aimant, chaque structure d'aimant étant composée d'une pluralité d'aimants unitaires, des disques de recouvrement étant disposés axialement sur chacune de deux faces axiales opposées dudit au moins un rotor, les disques de recouvrement étant en composite, les disques de recouvrement et les structures d'aimant étant enrobés dans une couche d'enrobage externe de composite définissant le contour extérieur dudit au moins un rotor.

Un des principaux buts de cette forme de réalisation préférée de la présente invention est de remplacer un ou plusieurs aimants de taille importante par une pluralité de petits aimants. Il y a donc une création de flux magnétique par une multitude de petits aimants dont le nombre peut être d'au moins 20 et peut même dépasser 100 par pôle aimant. Un rotor de l'état de la technique pouvait comprendre de 1 à 10 aimants alors que la forme préférentielle de la présente invention prévoit beaucoup plus d'aimants de petite taille dans chaque structure d'aimant.

Il convient de ne pas confondre une structure d'aimant, un rotor pouvant en porter par exemple de cinq à dix voire plus, avec les aimants unitaires qui sont nettement plus nombreux, un rotor pouvant en porter par exemple plusieurs centaines. Les petits aimants unitaires selon la présente invention peuvent être insérés dans des alvéoles respectives par un robot.

Ceci permet d'obtenir un rotor qui, entre autres avantages, peut tourner à grande vitesse et qui ne comprend pas de fer, ce qui limite les pertes rotoriques.

Selon cette forme optionnelle de l'invention, il a été découvert qu'une pluralité d'aimants unitaires donne une structure d'aimant plus résistante au niveau de la flexion globale du rotor tout en produisant très peu de chaleur du fait des faibles pertes générées, la chaleur dissipée par les aimants unitaires étant moindre que la chaleur dissipée par un aimant plus grand d'un seul tenant leur correspondant.

La structure d'aimant comporte une couche de composite non conductrice enrobant les aimants unitaires et le maillage. De plus, sa résistance mécanique peut être élevée et l'enrobage peut se faire aisément notamment par injection du composite sur une disposition d'aimants unitaires maintenus en place les uns par rapport aux autres par un moyen quelconque.

Avec un tel rotor, il est avantageux d'associer un ou deux stators comprenant des dents en fer avec des bobinages concentriques, ce qui est facile à réaliser. La seule difficulté était de simplifier l'opération de bobinage des dents, ce que la présente invention a résolu en utilisant un support de bobinage pouvant s'encliqueter sur la dent.

La présente invention accomplit la démarche inverse de la démarche suivie par beaucoup de fabricants de moteurs et de génératrices électromagnétiques. Il était connu de faire porter l'effort d'innovation sur les stators en concevant des bobinages de plus en plus complexes et difficiles à concevoir.

Du fait de la conception d'un rotor performant ne contenant pas de fer et enrobé par du composite en contenant des structures d'aimant faites chacune d'une pluralité d'aimants, ceci a permis d'utiliser des bobinages concentriques pour le ou les stators, alors qu'un tel bobinage concentrique ne donnait pas toute satisfaction avec des aimants permanents d'un seul tenant comme l'employait l'état de la technique le plus proche.

Il s'est avéré que l'utilisation d'une telle association d'un rotor composite avec au moins un stator en fer comportant des dents ou plots en fer et un bobinage concentrique pour le stator monté sur un support de bobinage procurait une synergie en ce qui concerne la puissance du moteur ou de la génératrice utilisée ainsi que la facilité de fabrication et la résistance mécanique du moteur ou la génératrice.

Avantageusement, le moteur comprend au moins deux stators et au moins un rotor.

La présente invention concerne aussi un procédé d'enroulement de bobinages sur une dent respective d'un stator de moteur ou de génératrice électromagnétique, le stator ou le moteur étant tels que décrit précédemment, caractérisé en ce qu'il comprend les étapes suivantes :
- bobinage d'un fil conducteur d'électricité autour d'une portion d'un support de bobinage, le support de bobinage étant inséré au moins partiellement ou non autour de la dent,
- quand le support de bobinage n'était pas préalablement au moins partiellement inséré autour de la dent, insertion au moins partielle du bobinage autour de la dent, et
- encliquetage du support de bobinage sur la dent en poussant le support de bobinage vers la culasse du stator.

Un maintien ferme des bobinages sur la dent associée est ainsi obtenu par l'utilisation d'un support de bobinage supportant le bobinage et l'empêchant de sortir d'autour de la dent en faisant butée contre une telle sortie. La solidarisation du support de bobinage avec la dent associée se fait par encliquetage simplement en insérant suffisamment le support de bobinage autour de la dent et en le poussant contre la culasse, par insertion de moyens d'encliquetage dans une rainure respective en tant que moyen d'encliquetage complémentaire.

Avantageusement des ergots latéraux portés dans l'intérieur du support de bobinage au voisinage du contour d'une dent pénètre dans une rainure respective portée par la dent, cet encliquetage se faisant automatiquement par élasticité du support de bobinage ou d'un élément de blocage pénétrant dans le support de bobinage et entourant au moins partiellement la dent.

D'autres caractéristiques, buts et avantages de la présente invention apparaîtront à la lecture de la description détaillée qui va suivre et au regard des dessins annexés donnés à titre d'exemples non limitatifs et sur lesquels :

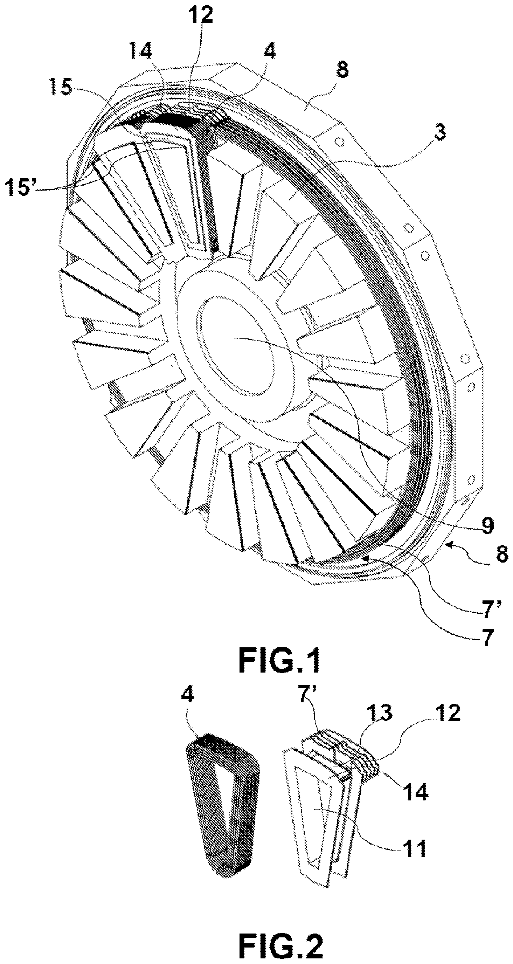

- la figure 1 est une représentation schématique d'une vue en perspective d'un stator comprenant des dents et des bobinages montés sur une dent respective, le stator étant conforme à la présente invention en incorporant un support de bobinage s'encliquetant sur la dent, deux supports de bobinage étant montrés à cette figure 1,
- la figure 2 est une représentation schématique d'une vue en perspective éclatée d'un support de bobinage et d'un bobinage, le support de bobinage étant utilisé dans un stator selon la présente invention,

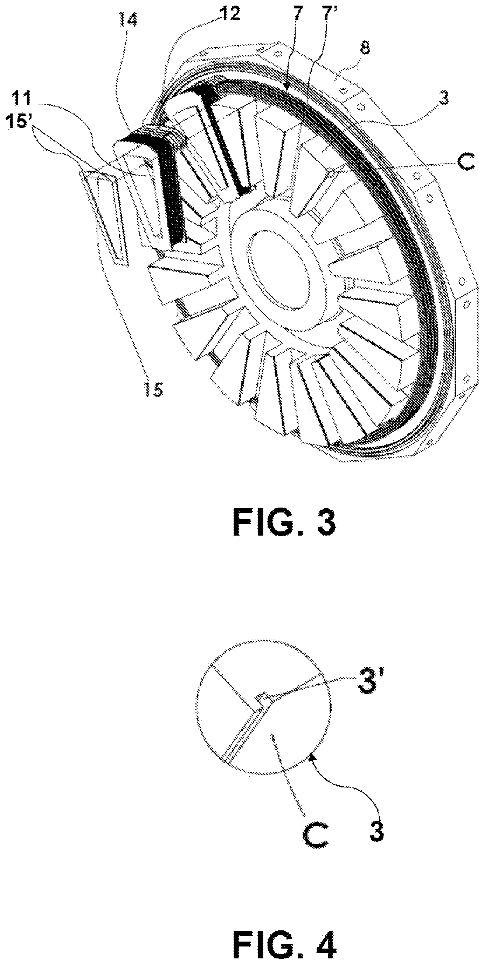

- la figure 3 reprend les caractéristiques de la figure 1, avec un support de bobinage et un élément de blocage montrés à distance du stator selon la présente invention, les moyens d'encliquetage de l'élément de blocage et les moyens d'encliquetage complémentaire portés par la dent associée étant visibles à cette figure 3,
- la figure 4 est une représentation schématique de la portion encadrée C agrandie par rapport aux autres figures d'une vue en perspective d'une portion de dent montrant les moyens d'encliquetage complémentaires portés par la dent, cette dent faisant partie d'un stator selon la présente invention.

Les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différentes pièces ne sont pas représentatives de la réalité.

Aux figures 1 et 3, seuls un support de bobinage, un élément de blocage et un support strié de phases sont référencés mais ce qui est énoncé pour ces éléments respectifs s'appliquent pour les autres éléments correspondants. Pour des raisons de clarté des figures, tous les bobinages et supports de bobinage ne sont pas représentés et toutes les dents, à l'exception de deux ou une dent, sont laissées sans bobinage.

En se référant à toutes les figures et plus particulièrement aux figures 1 et 3, la présente invention concerne un stator 8 de moteur ou génératrice électromagnétique comprenant des bobinages 4 et un circuit magnétique comportant une culasse de forme circulaire ou polygonale et des dents 3 de support de bobinage.

Aux figures 1 et 3, une seule dent est référencée 3 mais ce qui est énoncé pour cette dent 3 référencée est valable pour toutes les autres dents 3 du stator 8.

Selon l'invention, chaque bobinage 4 repose sur une dent 3 en entourant au moins partiellement un support de bobinage 13, 14. Cela implique qu'au moins une portion du support de bobinage 13, 14 est insérée autour de la dent 3.

Chaque support de bobinage 13, 14 comprend ou est associé à des moyens d'encliquetage 15' coopérant avec des moyens d'encliquetage complémentaires 3' portés par une dent 3 associée au support de bobinage 13, 14 afin que le support de bobinage 13, 14 soit solidarisé avec la dent 3 associée.

L'encliquetage peut se faire directement entre le support de bobinage 13, 14 et la dent 3 auquel cas chaque support de bobinage 13, 14 porte les moyens d'encliquetage 15' ou entre une pièce intermédiaire solidarisée au support de bobinage 13, 14 et la dent 3, auquel cas chaque support de bobinage 13, 14 est associé à des moyens d'encliquetage 15' que le support de bobinage 13, 14 ne porte pas.

Comme il peut notamment être vu à la figure 3, le support de bobinage 13, 14 peut comprendre une portion intermédiaire 13 sur laquelle est enroulé le bobinage 4 et une portion de recouvrement 14 plane se trouvant la plus éloignée de la dent 3 associée en position de solidarisation du support de bobinage 13, 14 sur la dent 3 en étant séparée de la dent 3 par le bobinage 4 et la portion intermédiaire 13. La portion de recouvrement 14 plane et la portion intermédiaire 13 peuvent être d'un seul tenant.

La portion de recouvrement 14 plane peut présenter un contour externe recouvrant à distance au moins un pourtour externe en vis-à-vis du bobinage 4 et d'une face de la dent 3 tournée vers le bobinage. A distance signifie que la portion de recouvrement 14 plane n'est pas en appui sur la face de la dent 3 tournée vers le bobinage 4 et recouvrir signifie que la portion de recouvrement 14 plane cache la face de la dent 3 tournée vers le bobinage 4 quand vue de face. Recouvrir au moins signifie que la surface de la portion de recouvrement 14 plane peut être plus grande que la surface de la dent 3 tournée vers le bobinage.

La portion de recouvrement 14 fait butée contre une sortie du bobinage 4 d'autour la dent 3 et d'autour la portion intermédiaire 13.

Comme il est visible à la figure 3, chaque bobinage 4 est enroulé concentriquement autour de la portion intermédiaire 13.

Comme il est visible aux figures 1 à 3, d'une part, chaque dent 3 et, d'autre part, les portions intermédiaire 13 et de recouvrement 14 de chaque support de bobinage 13, 14 peuvent être de forme trapézoïdale avec une petite base la plus interne à la culasse et une grande base la plus externe à la culasse reliées par deux faces latérales inclinées.

Il est aussi possible que les portions intermédiaires 13 et de recouvrement 14 de chaque support de bobinage 13, 14 puissent être de forme prismatique avec deux faces triangulaires. Ceci n'est pas montré aux figures mais est aisément dérivable de ces figures.

Comme précédemment mentionné, l'encliquetage entre le support de bobinage 13, 14 et la dent 3 associée peut être directe ou indirecte, directe signifiant que le support de bobinage 13, 14 réalise directement l'encliquetage avec la dent 3 associée et indirecte signifiant qu'un élément de blocage 15 intermédiaire solidarisé avec le support de bobinage 13, 14 réalise l'encliquetage avec la dent 3 associée.

Seule la deuxième forme de réalisation avec encliquetage indirecte est montrée aux figures. Néanmoins pour la description de la première forme de réalisation, il sera fait référence aux figures pour les caractéristiques communes aux deux formes de réalisation.

Dans la première forme de réalisation avec encliquetage direct non montrée aux figures, le contour externe de la portion de recouvrement 14 plane délimite intérieurement un espace vide 11 triangulaire ou quadrangulaire portant au moins une portion d'encliquetage faisant saillie vers la dent 3 en formant les moyens d'encliquetage 15.

En tant que moyens d'encliquetage complémentaires 3', la dent 3 peut comporter à proximité de chaque bord latéral de sa face en vis-à-vis du bobinage 4 une rainure 3', les deux rainures 3' logeant respectivement une des portions d'encliquetage. Les moyens d'encliquetage complémentaires 3' peuvent ainsi être les mêmes dans les deux formes de réalisation d'encliquetage direct ou indirect. Ceci peut être vu à la figure 4 montrant une vue agrandie d'une portion de dent 3 portant une rainure 3' et est commun aux deux formes de réalisation.

Dans la deuxième forme de réalisation avec encliquetage indirect, en se référant aux figures 1 à 4, le contour externe de la portion de recouvrement 14 plane peut délimiter intérieurement un espace vide 11 triangulaire ou quadrangulaire selon une forme prismatique ou trapézoïdale de la portion de recouvrement 14.

Dans cet espace vide 11 triangulaire ou quadrangulaire, un élément de blocage 15 de forme prismatique avec deux faces triangulaires ou de forme trapézoïdale est inséré. L'élément de blocage 15 peut présenter un contour externe correspondant au contour interne de l'espace vide 11 avec un jeu juste suffisant entre le contour externe de l'élément de blocage 15 et le contour interne de l'espace vide 11 pour une insertion de l'élément de blocage 15 dans l'espace vide 11.

Les bords de la face triangulaire en vis-à-vis de la dent 3 associée de l'élément de blocage 15 ou au moins les deux bords en vis-à-vis de la dent 3 associée des faces latérales inclinées de la forme trapézoïdale de l'élément de blocage 15 peuvent porter au moins une portion d'encliquetage 15' faisant saillie vers la dent 3 en formant les moyens d'encliquetage 15'.

Comme pour la première forme de réalisation, la dent 3 associée peut comporter à proximité de chaque bord latéral de sa face en vis-à-vis du bobinage 4 une rainure, les deux rainures 3' logeant respectivement une des portions d'encliquetage en formant les moyens d'encliquetage complémentaires 3'. Les rainures 3' peuvent s'étendre de préférence sur des faces inclinées latérales de la dent 3 et non forcément sur la face de la dent en vis-à-vis du bobinage.

Ceci peut être valable pour tous les supports de bobinage 4 et toutes les dents 3. La portion de recouvrement 14 plane associée à une dent 3 peut être adjacente à une portion de recouvrement 14 plane associée à chaque dent 3 adjacente. Un ensemble des portions de recouvrement peuvent alors former un anneau recouvrant entièrement les dents 3 et les intervalles les séparant.

Les dents 3 peuvent être en fer ou en plasto-ferrite tandis que les supports de bobinage 4 peuvent être en plastique résistant. Chaque dent 3 peut être formée par des tôles enroulées ou feuilletées.

L'élément de blocage 15, quand présent, est avantageusement métallique pour être résistant et réaliser un encliquetage ferme en position. Les bobinages 4 peuvent être des bobinages 4 triphasés.

Comme il est visible aux figures 1 à 3, le support de bobinage 13, 14 peut comprendre à une extrémité tournée vers la culasse un support strié des phases 12 de bobinage. Un ensemble des supports striés des phases 12 de bobinage 4 peut former un anneau 7 à la base des dents 3 contre la culasse du stator 8 supportant les dents 3, l'anneau 7 présentant des stries 7' concentriques, l'anneau étant concentrique au centre du stator 8 présentant un évidement central.

L'invention concerne un moteur ou génératrice électrique comprenant au moins un rotor et au moins un stator 8 tel que précédemment décrit, le moteur étant à flux axial. Le moteur peut comprendre au moins deux stators 8 et au moins un rotor.

Dans un mode de réalisation particulièrement avantageux mais non montré aux figures, le ou les rotors comprennent des structures d'aimant formant des pôles d'aimant, chaque structure d'aimant étant composée d'une pluralité d'aimants unitaires. Des disques de recouvrement peuvent être disposés axialement sur chacune de deux faces axiales opposées dudit au moins un rotor.

Il est possible d'utiliser différents types de matériaux pour les aimants unitaires sélectionnés par exemple entre des alliages samarium-cobalt (Sm-Co), des alliages d'aluminium, de nickel et de cobalt, des ferrites dures et des matériaux Néodyme-Fer-Bore, l'important étant que ces matériaux supportent d'être usinés en plots de petite largeur ou de petit diamètre comparé à leur longueur.

Les disques de recouvrement peuvent être en composite. De plus, les disques de recouvrement et les structures d'aimant peuvent être enrobés dans une couche d'enrobage externe de composite définissant le contour extérieur dudit au moins un rotor.

La présente invention concerne aussi un procédé d'enroulement de bobinages 4 sur une dent 3 respective d'un stator 8 de moteur ou de génératrice électromagnétique, le stator 8 ou le moteur étant tels que décrit précédemment.

Le procédé comprend l'étape de bobinage 4 d'un fil conducteur d'électricité, avantageusement en cuivre, autour d'une portion d'un support de bobinage 13, 14, le support de bobinage 13, 14 étant inséré au moins partiellement ou non autour de la dent 3 associée.

En effet, le support de bobinage 13, 14 peut être éloigné de la dent 3 associée lors du bobinage 4 ou déjà inséré partiellement autour de la dent.

Dans le premier cas, quand le support de bobinage 13, 14 n'était pas préalablement au moins partiellement inséré autour de la dent 3, il est procédé à l'insertion au moins partielle du bobinage 4 autour de la dent.

L'étape suivante est l'encliquetage du support de bobinage 13, 14 sur la dent 3 en poussant le support de bobinage 13, 14 vers la culasse du stator 8, c'est-à-dire en insérant le support de bobinage 13, 14 jusqu'à ce que ses moyens d'encliquetage 15' coopèrent avec des moyens d'encliquetage complémentaires 3' prévus sur la dent.

## Revendications

1. Stator (8) de moteur ou génératrice électromagnétique comprenant des bobinages (4) et un circuit magnétique, le stator (8) comportant une culasse de forme circulaire ou polygonale et des dents (3) de support de bobinage, chaque bobinage (4) reposant sur une dent (3) en entourant au moins partiellement un support de bobinage (13, 14), chaque support de bobinage (13, 14) comprenant ou étant associé à des moyens d'encliquetage (15')coopérant avec des moyens d'encliquetage complémentaires (3') portés par une dent (3) associée au support de bobinage (13, 14) afin que le support de bobinage (13, 14) soit solidarisé avec la dent (3) associée, avec, d'une part, chaque dent (3) et, d'autre part, les portions intermédiaire (13) et de recouvrement (14) plane de chaque support de bobinage (13, 14) étant de forme prismatique avec deux faces triangulaires ou de forme trapézoïdale avec une petite base la plus radialement interne à la culasse et une grande base la plus radialement externe à la culasse reliées par deux faces latérales inclinées, **caractérisé en ce que** le contour externe de la portion de recouvrement (14) plane délimite intérieurement un espace vide (11) triangulaire ou quadrangulaire portant soit au moins une portion d'encliquetage faisant saillie vers la dent (3) en formant les moyens d'encliquetage, la dent (3) comportant à proximité de chaque bord latéral de sa face en vis-à-vis du bobinage (4) une rainure (3'), les deux rainures (3') logeant respectivement une des portions d'encliquetage en formant les moyens d'encliquetage complémentaires (3') ou soit un élément de blocage (15) de forme prismatique avec deux faces triangulaires ou de forme trapézoïdale étant inséré, l'élément de blocage (15) présentant un contour externe correspondant au contour interne de l'espace vide (11) avec un jeu juste suffisant entre le contour externe de l'élément de blocage (15) et le contour interne de l'espace (11) pour une insertion de l'élément de blocage (15) dans l'espace vide (11), les bords de la face triangulaire en vis-à-vis de la dent (3) associée de l'élément de blocage (15) ou au moins les deux bords en vis-à-vis de la dent (3) associée des faces latérales inclinées de la forme trapézoïdale de l'élément de blocage (15) portant au moins une portion d'encliquetage (15') faisant saillie vers la dent (3) en formant les moyens d'encliquetage (15'), la dent (3) comportant à proximité de chaque bord latéral de sa face en vis-à-vis du bobinage (4) une rainure (3'), les deux rainures (3') logeant respectivement une des portions d'encliquetage (15') en formant les moyens d'encliquetage complémentaires (3') .

2. Stator (8) selon la revendication précédente, dans lequel le support de bobinage (13, 14) comprend une portion intermédiaire (13) sur laquelle est enroulé le bobinage (4) et une portion de recouvrement (14) plane se trouvant la plus éloignée de la dent (3) associée en position de solidarisation du support de bobinage (13, 14) sur la dent (3) en étant séparée de la dent (3) par le bobinage (4) et la portion intermédiaire (13), la portion de recouvrement (14) plane présentant un contour externe recouvrant à distance au moins un pourtour externe en vis-à-vis du bobinage (4) et en faisant butée contre le pourtour externe du bobinage (4), le support de bobinage (13, 14) étant d'un seul tenant ou non.

3. Stator (8) selon la revendication précédente, dans lequel chaque bobinage (4) est enroulé concentriquement autour de la portion intermédiaire (13).

4. Stator (8) selon l'une quelconque des revendications précédentes, dans lequel la portion de recouvrement (14) plane associée à une dent (3) est adjacente à une portion de recouvrement (14) plane associée à chaque dent (3) adjacente, un ensemble des portions de recouvrement (14) formant un anneau recouvrant entièrement les dents (3) et les intervalles les séparant.

5. Stator (8) selon l'une quelconque des revendications précédentes, dans lequel les supports de bobinage (4) sont en plastique.

6. Stator (8) selon l'une quelconque des revendications précédentes, dans lequel les bobinages (4) sont des bobinages (4) triphasés.

7. Stator (8) selon la revendication précédente, dans lequel le support de bobinage (13, 14) comprend à une extrémité tournée vers la culasse un support strié des phases (12) de bobinage, un ensemble des supports striés des phases (12) de bobinage (4) formant un anneau (7) à la base des dents (3) contre la culasse du stator (8) supportant les dents (3), l'anneau (7) présentant des stries (7') concentriques.

8. Stator (8) selon l'une quelconque des revendications précédentes, dans lequel chaque dent (3) est formée par des tôles enroulées ou feuilletées.

9. Moteur ou génératrice électrique comprenant au moins un rotor et au moins un stator (8), le moteur étant à flux axial, **caractérisé en ce que** le stator (8) est selon l'une quelconque des revendications précédentes.

10. Moteur selon la revendication précédente, dans lequel ledit au moins un rotor comprend des structures d'aimant formant des pôles d'aimant, chaque structure d'aimant étant composée d'une pluralité d'aimants unitaires, des disques de recouvrement étant disposés axialement sur chacune de deux faces axiales opposées dudit au moins un rotor, les disques de recouvrement étant en composite, les disques de recouvrement et les structures d'aimant étant enrobés dans une couche d'enrobage externe de composite définissant le contour extérieur dudit au moins un rotor.

11. Moteur selon la revendication précédente, lequel comprend au moins deux stators (8) et au moins un rotor.

12. Procédé d'enroulement de bobinages (4) sur une dent (3) respective d'un stator (8) de moteur ou de génératrice électromagnétique, le stator (8) étant selon l'une quelconque des revendications 1 à 8 ou le moteur étant conforme à l'une quelconque des revendications 9 à 11, **caractérisé en ce qu'**il comprend les étapes suivantes :
- bobinage (4) d'un fil conducteur d'électricité autour d'une portion d'un support de bobinage (13, 14), le support de bobinage (13, 14) étant inséré au moins partiellement ou non autour de la dent (3),
- quand le support de bobinage (13, 14) n'était pas préalablement au moins partiellement inséré autour de la dent (3), insertion au moins partielle du bobinage (4) autour de la dent (3), et
- encliquetage du support de bobinage (13, 14) sur la dent (3) en poussant le support de bobinage (13, 14) vers la culasse du stator (8) par insertion de moyens d'encliquetage dans une rainure (3') respective en tant que moyen d'encliquetage complémentaire.

## Patentansprüche

1. Stator (8) für einen Motor oder einen elektromagnetischen Generator, der Wicklungen (4) und einen Magnetkreis umfasst, wobei der Stator (8) ein Joch in kreisrunder oder vieleckiger Form, und Zähne (3) zum Tragen einer Wicklung beinhaltet, wobei jede Wicklung (4) auf einem Zahn (3) aufliegt, indem sie einen Wicklungsträger (13, 14) mindestens teilweise umgibt, wobei jeder Wicklungsträger (13, 14) Mittel zum Aufschnappen (15') umfasst, oder diesen zugeordnet ist, die mit ergänzenden Mitteln zum Aufschnappen (3') zusammenwirken, die von einem Zahn (3) getragen werden, welcher dem Wicklungsträger (13, 14) zugeordnet ist, damit der Wicklungsträger (13, 14) mit dem zugeordneten Zahn (3) mit, einerseits, jedem Zahn (3) und, andererseits, dem Zwischen- (13) und dem ebenen Abdeckungsabschnitt (14) eines jeden Wicklungsträgers (13, 14) fest verbunden ist, der in prismatischer Form mit zwei dreieckigen Seiten, oder in Trapezform ist, mit einer kleinen Grundfläche, welche die radial innerste zum Joch ist, und einer großen Grundfläche, welche die radial äußerste zum Joch ist, welche durch zwei geneigte Seitenflächen verbunden sind, **dadurch gekennzeichnet, dass** die Außenkontur des ebenen Abdeckungsabschnitts (14) innen einen dreieckigen oder viereckigen Hohlraum (11) begrenzt, der entweder mindestens einen Aufschnapp-Abschnitt trägt, der zum Zahn (3) hervorsteht und dabei die Mittel zum Aufschnappen bildet, wobei der Zahn (3) in der Nähe einer jeden Seitenkante seiner Seite gegenüber der Wicklung (4) eine Nut (3') beinhaltet, wobei die beiden Nuten (3') jeweils einen der Aufschnapp-Abschnitte aufnehmen, indem sie die ergänzenden Mittel zum Aufschnappen (3') bilden, oder ein Sperrelement (15) in prismatischer Form mit zwei dreieckigen Seiten oder in Trapezform, welches eingeführt wird, wobei das Sperrelement (15) eine Außenkontur aufweist, welche der Innenkontur des Hohlraums (11) mit einem Spiel entspricht, das zwischen der Außenkontur des Sperrelements (15) und der Innenkontur des Leerraums (11) gerade für ein Einführen des Sperrelements (15) in den Hohlraum (11) ausreichend ist, wobei die Kanten der dreieckigen Seite gegenüber dem zugeordneten Zahn (3) des Sperrelements (15) oder mindestens die beiden Kanten gegenüber dem zugeordneten Zahn (3) der geneigten Seitenflächen der Trapezform des Sperrelements (15) mindestens einen Aufschnapp-Abschnitt (15') tragen, der zum Zahn (3) hervorsteht, und dabei die Mittel zum Aufschnappen (15') bildet, wobei der Zahn (3) in der Nähe einer jeden Seitenkante seiner Fläche gegenüber der Wicklung (4) eine Nut (3') beinhaltet, wobei die beiden Nuten (3') jeweils einen der Aufschnapp-Abschnitte (15') aufnehmen und dabei die ergänzenden Rastmittel (3') bilden.

2. Stator (8) nach dem vorstehenden Anspruch, wobei der Wicklungsträger (13, 14) einen Zwischenabschnitt (13) umfasst, auf dem die Wicklung (4) aufgewickelt ist, und einen ebenen Abdeckungsabschnitt (14), der sich am weitesten von dem zugeordneten Zahn (3) entfernt, in einer festen Verbindungsposition mit dem Wicklungsträger (13, 14) auf dem Zahn (3) befindet, und dabei von dem Zahn (3) durch die Wicklung (4) und den Zwischenabschnitt (13) getrennt ist, wobei der ebene Abdeckungsabschnitt (14) eine Außenkontur aufweist, die im Abstand mindestens einen Außenumfang gegenüber der Wicklung (4) abdeckt, und als Anschlag gegen den Außenumfang der Wicklung (4) fungiert, wobei der Wicklungsträger (13, 14) in einem Stück ist oder nicht.

3. Stator (8) nach dem vorstehenden Anspruch, wobei jede Wicklung (4) konzentrisch um den Zwischenabschnitt (13) herum aufgewickelt ist.

4. Stator (8) nach einem der vorstehenden Ansprüche, wobei der ebene Abdeckungsabschnitt (14), der einem Zahn (3) zugeordnet ist, einem ebenen Abdeckungsabschnitt (14) benachbart ist, der jedem benachbarten Zahn (3) zugeordnet ist, wobei eine Reihe von Abdeckungsabschnitten (14) einen Ring bildet, der die Zähne (3) und die diese trennenden Intervalle vollständig abdeckt.

5. Stator (8) nach einem der vorstehenden Ansprüche, wobei die Wicklungsträger (4) aus Kunststoff sind.

6. Stator (8) nach einem der vorstehenden Ansprüche, wobei die Wicklungen (4) Drehstromwicklungen (4) sind.

7. Stator (8) nach dem vorstehenden Anspruch, wobei der Wicklungsträger (13, 14) an einem dem Joch zugewandten Ende einen gestreiften Träger der Wicklungsphasen (12) umfasst, wobei eine Reihe gestreifter Träger der Phasen (12) einer Wicklung (4) einen Ring (7) an der Basis der Zähne (3) gegen das Joch des Stators (8) bildet, welcher die Zähne (3) trägt, wobei der Ring (7) konzentrische Streifen (7') aufweist.

8. Stator (8) nach einem der vorstehenden Ansprüche, wobei jeder Zahn (3) aus gewickelten oder laminierten Blechen gebildet ist.

9. Motor oder Stromgenerator, der mindestens einen Rotor und mindestens einen Stator (8) umfasst, wobei der Motor ein Axialstrommotor ist, **dadurch gekennzeichnet, dass** der Stator (8) nach einem der vorstehenden Ansprüche definiert ist.

10. Motor nach dem vorstehenden Anspruch, wobei der mindestens eine Rotor Magnetstrukturen umfasst, die Magnetpole bilden, wobei sich jede Magnetstruktur aus einer Vielzahl von einzelnen Magneten zusammensetzt, wobei Abdeckungsscheiben axial auf jeder der beiden gegenüberliegenden axialen Seiten des mindestens einen Rotors angeordnet sind, wobei die Abdeckungsscheiben aus Verbundstoff sind, wobei die Abdeckungsscheiben und die Magnetstrukturen in einer Außenumhüllungsschicht aus Verbundstoff umhüllt sind, die die Außenkontur des mindestens einen Rotors definiert.

11. Motor nach dem vorstehenden Anspruch, welcher mindestens zwei Statoren (8) und mindestens einen Rotor umfasst.

12. Verfahren zum Wickeln von Wicklungen (4) auf einen jeweiligen Zahn (3) eines Stators (8) für einen Motor oder einen elektromagnetischen Generator, wobei der Stator (8) nach einem der Ansprüche 1 bis 8 definiert ist oder der Motor einem der Ansprüche 9 bis 11 entspricht, **dadurch gekennzeichnet, dass** es die folgenden Schritte umfasst:
- Wicklung (4) aus einem leitenden Elektrodraht um einen Abschnitt eines Wicklungsträgers (13, 14), wobei der Wicklungsträger (13, 14) mindestens teilweise oder nicht um den Zahn (3) herum eingeführt wird,
- wenn der Wicklungsträger (13, 14) zuvor nicht mindestens teilweise um den Zahn herum (3) eingeführt worden ist, mindestens teilweises Einführen der Wicklung (4) um den Zahn (3), und
- Aufschnappen des Wicklungsträgers (13, 14) auf den Zahn (3) durch Schieben des Wicklungsträgers (13, 14) zum Joch des Stators (8) durch Einführen von Mitteln zum Aufschnappen in eine jeweilige Nut (3') als ergänzendes Mittel zum Aufschnappen.

## Claims

1. A stator (8) of an electromagnetic motor or generator comprising windings (4) and a magnetic circuit, the stator (8) including a circular or polygonal frame and winding support teeth (3), each winding (4) resting on a tooth (3) while surrounding at least partially a winding support (13, 14), each winding support (13, 14) comprising or being associated to snap-fitting means (15') cooperating with complementary snap-fitting means (3') carried by a tooth (3) associated to the winding support (13, 14) so that the winding support (13, 14) is secured to the associated tooth (3), with, on the one hand, each tooth (3) and, on the other hand, the intermediate (13) and planar cover (14) portions of each winding support (13, 14) being prismatic with two triangular faces or trapezoidal with a small base radially innermost to the frame and a large base radially outermost to the frame connected by two inclined lateral faces, **characterised in that** the outer contour of the planar cover portion (14) internally delimits a triangular or quadrangular empty space (11) carrying either at least one snap-fitting portion projecting towards the tooth (3) while forming the snap-fitting means, the tooth (3) including proximate to each lateral edge of its face opposite the winding (4) a groove (3'), the two grooves (3') respectively accommodating one of the snap-fitting portions while forming the complementary snap-fitting means (3') or a blocking element (15) which is prismatic with two triangular faces or trapezoidal being inserted, the blocking element (15) having an outer contour corresponding to the inner contour of the empty space (11) with a clearance between the outer contour of the blocking element (15) and the inner contour of the space (11) just enough for an insertion of the blocking element (15) into the empty space (11), the edges of the triangular face opposite the associated tooth (3) of the blocking element (15) or at least the two edges opposite the associated tooth (3) of the inclined lateral faces of the trapezoidal shape of the blocking element (15) carrying at least one snap-fitting portion (15') projecting towards the tooth (3) while forming the snap-fitting means (15'), the tooth (3) including proximate to each lateral edge of its face opposite the winding (4) a groove (3'), the two grooves (3') respectively accommodating one of the snap-fitting portions (15') while forming the complementary snap-fitting means (3').

2. The stator (8) according to the preceding claim, wherein the winding support (13, 14) comprises an intermediate portion (13) on which the winding (4) is wound and a planar cover portion (14) located the furthermost from the associated tooth (3) in a position for securing the winding support (13, 14) on the tooth (3) by being separated from the tooth (3) by the winding (4) and the intermediate portion (13), the planar cover portion (14) having an outer contour remotely covering at least one outer perimeter opposite the winding (4) and by abutting against the outer perimeter of the winding (4), the winding support (13, 14) being made in one piece or not.

3. The stator (8) according to the preceding claim, wherein each winding (4) is wound concentrically around the intermediate portion (13).

4. The stator (8) according to any one of the preceding claims, wherein the planar cover portion (14) associated to one tooth (3) is adjacent to a planar cover portion (14) associated to each adjacent tooth (3), a set of cover portions (14) forming a ring covering completely the teeth (3) and the intervals separating them.

5. The stator (8) according to any one of the preceding claims, wherein the winding (4) supports are made of plastic.

6. The stator (8) according to any one of the preceding claims, wherein the windings (4) are three-phase windings (4).

7. The stator (8) according to the preceding claim, wherein the winding support (13, 14) comprises at one end turned towards the frame a striated support of the winding phases (12), a set of the striated supports of the winding (4) phases (12) forming a ring (7) at the root of the teeth (3) against the frame of the stator (8) supporting the teeth (3), the ring (7) having concentric striations (7').

8. The stator (8) according to any one of the preceding claims, wherein each tooth (3) is formed by wound or laminated sheet metals.

9. An electric motor or generator comprising at least one rotor and at least one stator (8), the motor being an axial-flux one, **characterised in that** the stator (8) is according to any one of the preceding claims.

10. The motor according to the preceding claim, wherein said at least one rotor comprises magnet structures forming magnet poles, each magnet structure consisting of a plurality of magnet units, cover disks being disposed axially on each of two opposite axial faces of said at least one rotor, the cover disks being made of a composite, the cover disks and the magnet structures being coated in an outer coating layer of composite defining the external contour of said at least one rotor.

11. The motor according to the preceding claim, which comprises at least two stators (8) and at least one rotor.

12. A method for winding windings (4) on a respective tooth (3) of a stator (8) of an electromagnetic motor or generator, the stator (8) being according to any one of claims 1 to 8 or the motor being in accordance with any one of claims 9 to 11, **characterised in that** it comprises the following steps:
- winding (4) an electrically-conductive wire around a portion of a winding portion (13, 14), the winding support (13, 14) being inserted at least partially or not around the tooth (3),
- in the case where the winding support (13, 14) was not already at least partially inserted around the tooth (3), at least partially inserting the winding (4) around the tooth (3), and
- snap-fitting the winding support (13, 14) on the tooth (3) by pushing the winding support (13, 14) towards the frame of the stator (8) by inserting snap-fitting means in a respective groove (3') as a complementary snap-fitting means.
